# EUROPEAN PATENT SPECIFICATION

(11) **EP 3 749 431 B1**
(45) Date of publication and mention of the grant of the patent: **23.09.2026**
(21) Application number: 19750447.5
(22) Date of filing: 07.02.2019
(51) Int. Cl.: B01D 15/36, B01D 61/00, B03D 1/02, B01D 37/00

(54) **OPEN-NETWORK FOAM OF HYDROPHOBIC MATERIAL FOR SELECTIVE SEPARATION OF MINERAL PARTICLES**
OFFENPORIGER SCHAUM AUS HYDROPHOBEM MATERIAL ZUR SELEKTIVEN TRENNUNG VON MINERALISCHEN PARTIKELN
MOUSSE À CELLULES OUVERTES OU RÉTICULÉE PRÉSENTANT UNE STRUCTURE TRIDIMENSIONNELLE EN RÉSEAU OUVERT CONSTITUÉE D'UN MATÉRIAU HYDROPHOBE POUR LA SÉPARATION SÉLECTIVE DE PARTICULES MINÉRALES

(30) Priority: 07.02.2018 US 201862627266 P
(43) Date of publication of application: 16.12.2020
(73) Proprietor: Cidra Corporate Services LLC, Wallingford, CT 06492 (US)
(72) Inventor: ROTHMAN, Paul J., Windsor, Connecticut 06095 (US); FERNALD, Mark R., Enfield, Connecticut 06082 (US); DIDDEN, Francis, Wallingford, Connecticut 06492 (US); O'KEEFE, Christian V., Durham, Connecticut 06422 (US); ADAMSON, Douglas H., Mansfield Centre, Connecticut 06250 (US); DOLAN, Paul, Portland, Connecticut 06780 (US); BAILEY, Timothy J., Longmeadow, Massachusetts 01106 (US); RYAN, Michael Stephen, Newtown, Connecticut 06470 (US); HUANG, Weiguo, Windsor, Connecticut 06095 (US); LASSILA, Kevin Rodney, Bethany, Connecticut 06524 (US); COPPOLA, Michael D., Trumball, Connecticut 06611 (US); GREENE, Allison K., Hartford, Connecticut 06107 (US)
(74) Representative: Schmitt-Nilson Schraud Waibel Wohlfrom Patentanwälte Partnerschaft mbB
(86) International application number: PCT/US2019/017003
(87) International publication number: WO 2019/157147

(56) References cited:
- EP-B1- 0 361 334
- EP-B1- 0 950 083
- EP-B1- 2 193 008
- CA-A1- 3 004 188
- US-A- 3 703 482
- US-A- 3 980 688
- US-A- 4 377 510
- US-A- 5 256 298
- US-A- 5 256 298
- US-A1- 2012 100 783
- US-A1- 2016 067 631
- US-A1- 2016 235 880
- US-A1- 2017 232 451
- US-A1- 2017 361 333
- US-B2- 8 168 431
- US-B2- 9 139 683
- US-B2- 9 403 958
- "Polyurethane", WIKIPEDIA, 31 January 2018 (2018-01-31), pages 1 - 18, XP055727342, Retrieved from the Internet <URL:https://en.wikipedia.org/w/index.php?title=Polyurethane&oldid=823228558> [retrieved on 20190328]

## Description

### BACKGROUND OF THE INVENTION

### 1. Technical Field

This invention relates generally to techniques for separating valuable material from unwanted material in a mixture, such as a pulp slurry; and more particularly, relates to a method and apparatus for separating valuable material from unwanted material in a mixture, such as a pulp slurry, using engineered collection media, and also relates to an engineered collection medium.

### 2. Description of Related Art

In many industrial processes, flotation is used to separate valuable or desired material from unwanted material. By way of example, in this process a mixture of water, valuable material, unwanted material, chemicals and air is placed into a flotation cell. The chemicals are used to make the desired material hydrophobic and the air is used to carry the material to the surface of the flotation cell. When the hydrophobic material and the air bubbles collide they become attached to each other. The bubble rises to the surface carrying the desired material with it.

The performance of the flotation cell is dependent on the air bubble surface area flux and air bubble size distribution in the collection zone of the cell. The air bubble surface area flux is dependent on the size of the bubbles and the air injection rate. Controlling the air bubble surface area flux has traditionally been very difficult. This is a multivariable control problem and there are no dependable real time feedback mechanisms to use for control.

US 5 256 298 A discloses an apparatus and method for facilitating mass transfer between fluid and solid phases, wherein a continuous belt of resilient open-cell foam polymer material is moved alternately between bulk liquid and gas phases where mass transfer takes place by direct transport to the polymer surface as a consequence of compression and release of the belt. The belt may be made from polyurethane foam, and it may be used, for example, for removing dissolved minerals from water.

US 2016/067631 A1 discloses a system for mineral recovery using a conveyor belt made of polyurethane and/or polyurethane beads. The polyurethane material is coated in order to effectively collect the valuable material of interest.

US 2017/361333 A1 also discloses a system for mineral recovery, wherein an engineered polymer is used for collecting mineral particles. As an engineered polymer many materials, including a polyurethane rubber coated with a silicone gel, are disclosed.

There is a need in the industry to provide a better way to separate valuable material from unwanted material, e.g., including in such a flotation cell, so as to eliminate problems associated with using air bubbles in such a separation process.

In the past, particles or substrates with a hydrophobic coating have been used to attract mineral particles. However, the durability of the coatings is limited due to adhesive or cohesive failure of the coating on the substrate.

### SUMMARY OF THE DISCLOSURE

Subject-matter of the present invention is an engineered collection medium as claimed in independent claim 1, a method for separating mineral particles from unwanted material in a mixture using an engineered collection medium, as claimed in independent claim 6, and an apparatus suitable for performing the method of the present invention, as claimed in independent claim 10. Embodiments of the present invention are claimed in the respective dependent claims.

The present invention provides a collection medium that is effective in selectively collecting mineral particles from an aqueous slurry without a surface coating. The collection medium has a compliant, tacky surface of low energy. The collection medium is synthesized as a reaction product of a particular isocyanate and a particular polyol in the presence of a hydrophobic surfactant. To be more effective in collecting mineral particles, the collection medium is configured as a solid-phase body having a three-dimensional open-cell structure, open-network structure or a reticulated foam to provide a plurality of collection surfaces.

Careful selection of the isocyanate, polyol and surfactant used in controlling foam cell size provides a polyurethane foam suitable for selective mineral collection. A hydrophobic polyol is reacted with an isocyanateselected from the group consisting of 1,6-hexamethylene diisocyanate (HDI), 1-isocyanato-3-isocyanatomethyl-3,5,5-trimethyl-cyclohexane (IPDI), or 4,4'-diisocyanato dicyclohexylmethane (H12MDI), methylene diphenyl diisocyanate (MDI) and toluene diisocyanate (TDI) to provide improved hydrophobicity. Polyols are selected from the group consisting of polyester polyols, polyether polyols, polycarbonate polyols, polycaprolactone polyols, polybutadiene polyols, polysulfide polyols or fluorinated polyols, the polyols being selected for high hydrophobicity. Hydrophobicity is further increased through use of a hydrophobic surfactant in the foam-making process. For example, alkyl or aryl EO-PO, polydimethylsiloxane-polyoxyalkylene block copolymers or fluorinated surfactants may be useful. Tackifiers are helpful in providing the necessary tack. For this, e.g. hydrogenated rosin resins, rosin esters, styrenated terpenes, polyterpenes, terpene phenolics, or phenolic resins may be used. Various catalysts and blowing agents may be used to initiate the polymerization and foaming process. The final product is compliant, tough, hydrophobic, and tacky throughout its composition. It has improved durability due to the lack of sensitive coating.

The structure may be in the form of sheets, cubes, spheres, or other shapes as well as densities (described by pores per inch and pore size distribution), and levels of tortuosity that optimize surface access, surface area, mineral attachment/ detachment kinetics, and durability. These structures may be additionally optimized to target certain mineral particle size ranges, with denser structures acquiring smaller particle sizes. In general, cellular densities may range from 3.9 to 78.7 pores per cm (10 - 200 pores per inch), more preferably 3.9 to 35.4 pores per cm (10 - 90 pores per inch), and most preferably 7.8 to 23.6 pores per cm (20 - 60 pores per inch).

The open-network structure or reticulated foam made from the reaction product of an isocyanate and polyol is herein referred to as a hydrophobic foam. It can be generally used as an engineered collection medium for mineral separation. The collection medium can take the form of synthetic beads, in a cube form or a sphere form. Each of the synthetic beads can be entirely made of the hydrophobic foam, or has a core with a surface layer, while the core can be made of various polymers, glass, ceramic, metal or magnetic material, the surface layer is made of the hydrophobic foam. The collection medium can take the form of a sheet to be used as a filter, a conveyor belt or any mineral collection substrate.

Thus, it is a first aspect of the present invention to provide an engineered collection medium, as defined in claim 1, i.e. the engineered collection medium comprises
a solid-phase body configured with a three-dimensional open-cell structure to provide a plurality of collection surfaces, the three-dimensional open-cell structure made of a hydrophobic material for attracting one or more mineral particles to the collection surfaces, wherein the hydrophobic material is made of a reaction product of an isocyanate and a polyol.

According to the present invention, the isocyanate is selected from the group consisting of 1,6-hexamethylene diisocyanate, 1-isocyantato-3-isocyanatomethyl-3,5,5-trimethyl-cyclohexane (IPDI), 4,4'-diisocyanato dicyclohexylmethane (H12MDI), methylene diphenyl diisocyanate (MDI) and toluene diisocyanate (TDI).

According to the present invention, the polyol is selected from the group consisting of polyester polyols, polyether polyols, polycarbonate polyol, polycaprolactone polyol, polybutadiene polyol, polysulfide polyol and fluorinated polyol.

According to the present invention, the hydrophobic material is made of the reaction product of the isocyanate and the polyol in the presence of a hydrophobic surfactant. A catalyst and/or blowing agent may be also present.

In addition, according to the present invention, one or more of the following features may be implemented:
The surfactant is alkyl or aryl EO-PO, polydimethylsiloxane-polyoxyalkylene block copolymers or fluorinated surfactant.

The hydrophobic material further comprises hydrogenated rosin resins, rosin esters, styrenated terpenes, polyterpenes, terpene phenolics, or phenolic resins.

The solid-phase body comprises a body form of a sheet, cube, sphere.

The three-dimensional open-cell structure comprises a cellular density in the range of 3.9 to 78.7 pores per cm (10 to 200 pores per inch).

The three-dimensional open-cell structure comprises a cellular density in the range of 3.9 to 35.4 pores per cm (10 to 90 pores per inch), and preferably 7.8 to 23.6 pores per cm (20-60 pores per inch).

The solid-phase body comprises a reticulated foam block providing the three-dimensional open-cell structure.

The solid-phase body comprises a filter providing the three-dimensional open-cell structure, the structure having open cells to allow fluid in the aqueous mixture to flow through the filter.

The solid-phase body comprises a conveyor belt having a surface configured with the three-dimensional open-cell structure.

The three-dimensional open-cell structure comprises an open cell foam.

The second aspect of the present invention is an apparatusas defined in claim 10, i.e. the apparatus comprises one or more engineered collection media, a device configured to attach mineral particles to said one or more engineered collection media to provide one or more engineered collection media carrying mineral particles,
a processor configured to receive said one or more engineered collection media carrying mineral particles, each of said one or more engineered collection media comprising a solid phase body configured with a three-dimensional open-cell structure to provide a plurality of collection surfaces; and
a releasing apparatus configured to remove the mineral particles from the collection surfaces, wherein the three-dimensional open-cell structure is made of a hydrophobic material for attracting one or more mineral particles to the collection surfaces, and the hydrophobic material is made of a reaction product of an isocyanate and a polyol.

According to the present invention, the isocyanate is selected from the group consisting of 1,6-hexamethylene diisocyanate, 1-isocyantato-3-isocyanatomethyl-3,5,5-trimethyl-cyclohexane (IPDI), 4,4'-diisocyanato dicyclohexylmethane (H12MDI), methylene diphenyl diisocyanate (MDI) and toluene diisocyanate (TDI); the polyol is selected from the group consisting of polyester polyols, polyether polyols, polycarbonate polyol, polycaprolactone polyol, polybutadiene polyol, polysulfide polyol and fluorinated polyol.

According to the present invention, the hydrophobic material is made of the reaction product of the isocyanate and the polyol in the presence of surfactant. The surfactant is alkyl or aryl EO-PO, polydimethylsiloxane-polyoxyalkylene block copolymers or fluorinated surfactant, and the hydrophobic material further comprises hydrogenated rosin resins, rosin esters, styrenated terpenes, polyterpenes, terpene phenolics, or phenolic resins.

The releasing apparatus comprises a stirrer configured to provide mechanical agitation so as to remove the mineral particles from the collection surfaces.

The solid phase body comprises a conveyor belt carrying the mineral particles, the releasing apparatus comprising a brushing device configured to rub against the conveyor belt so as to remove the mineral particles from the collection surfaces.

The third aspect of the present invention is a method for separating mineral particles from unwanted material in a mixture using an engineered collection medium, the method comprising steps as defined in claim 6; i.e.
attaching mineral particles to one or more engineered collection media to provide one or more engineered collection media carrying mineral particles,
providing a processor configured to receive said one or more engineered collection media carrying mineral particles, and
applying interruption forces to the engineered collection medium carrying mineral particles so as to remove the mineral particles from the collection surfaces,
wherein each of said one or more engineered collection media is a collection medium according to the first aspect of the present invention.

According to the present invention, the method may further implement one or more of the following features:
Providing a stirrer configured to provide mechanical agitation in a surfactant solution so as to remove the mineral particles from the collection surfaces.

The solid phase body comprises a conveyor belt carrying the mineral particles, and the method further comprises causing a brushing device to rub against the conveyor belt for removing the mineral particles from the collection surfaces.

The method further comprises:
providing a sonic source configured to provide ultrasonic waves in a liquid medium for remove the mineral particles from the collection surfaces.

In the first aspect, the present invention includes, or takes the form of, an engineered collection medium featuring a solid-phase body configured with a three-dimensional open-cell structure to provide a plurality of collection surfaces, causing the mineral particles to attach to the collection surfaces. The three-dimensional open cellular structure can be optimized to provide a compliant, tacky surface of low energy which enhances collection of hydrophobic or hydrophobized mineral particles ranging widely in particle size. The collection medium, according to the present invention, is not coated. Polyurethane foam is itself the collection medium such that the polyurethane is synthesized to have the necessary properties for efficient and selective collection of hydrophobic particles.

The solid-phase body may include, or take the form of, a reticulated foam block providing the three-dimensional open-cell structure.

The solid-phase body may include a filter providing the three-dimensional open-cell structure, the structure having open cells to allow fluid in the aqueous mixture to flow through the filter.

The solid-phase body may include a conveyor belt having a surface configured with the three-dimensional open-cell structure.

The engineered collection media may include different open cell foams having different specific surface areas that are blended to recover a specific size distribution of mineral particles in the slurry.

### The Method

According to a further aspect, the present invention takes the form of a method for separating particles from unwanted material in a mixture using an engineered collection medium, the method comprising steps as defined in claim 6; i.e.
attaching mineral particles to one or more engineered collection media to provide one or more engineered collection media carrying mineral particles,
providing a processor configured to receive said one or more engineered collection media carrying mineral particles, and
applying an interrupting force to the engineered collection medium carrying mineral particles so as to remove the mineral particles from the collection surfaces,
wherein each of said one or more engineered collection media is a collection medium according to the first aspect of the present invention.

The method may also include a step for providing a stirrer configured to provide mechanical agitation so as facilitate said interrupting, and wherein said interrupting is carried out in a surfactant.

The solid phase body may include a conveyor belt carrying the mineral particles, including where the method further includes a step for causing a brushing device to rub against the conveyor belt for removing the mineral particles from the collection surfaces.

The method may also include a step for providing a sonic source configured to provide ultrasonic waves in a liquid medium for removing the mineral particles from the collection surfaces. For example, ultrasound signals in the range of 20KHz to 300HKz for the sonic agitation. The synthetic beads carrying the mineral particles may be received along with a mixture having a first pH value, and the step for interrupting may include causing the synthetic beads carrying the mineral particles to contact with a medium having a second pH value lower than the first pH value, including where the second pH value ranges from 0 to 7.

The step of interrupting may include mechanically causing the synthetic beads to move against each other, including arranging a rotational means or device to stir the synthetic beads.

Part of the synthetic beads carrying the mineral particles may have a core made of a magnetic material, and the step of interrupting may include arranging a magnetic stirrer to stir the synthetic beads.

The synthetic beads carrying the mineral particles may be received along with a mixture, wherein said interrupting comprises selecting two or more of the following interrupting techniques: 1) lowering pH value of the mixture, 2) applying an ultrasound to the mixture; 3) increasing temperature of the mixture and 4) mechanically stirring the mixture. The selected interrupting techniques may be used on the mixture concurrently or sequentially.

In all these embodiments, the synthetic beads may be made of the hydrophobic foam or have a body made of polymer, glass or ceramic having a surface layer made of the hydrophobic foam, according to the present invention. As described above, the hydrophobic foam is an open-network or a three-dimensional open-cell structure made from a reaction product of a particular isocyanate and a particular polyol in the presence of a hydrophobic surfactant.

### The Apparatus

According to another aspect, the present invention takes the form of an apparatus as defined in claim 10, the apparatus featuring a processor configured to receive a plurality of engineered collection media in the form of synthetic beads carrying mineral particles, each of the synthetic beads comprising an open-network structure or a three-dimensional open-cell structure made from a hydrophobic material which is a reaction product to an isocyanate and a polyol. The three-dimensional open-cell structure is hydrophobic and tacky for attracting or attaching one or more of the mineral particles to the molecules, causing the mineral particles to attach to synthetic beads. The apparatus also has a releasing stage configured to apply an interrupting force so as to remove the mineral particles from the synthetic beads. In this apparatus, the plurality of synthetic beads may be entirely made of the hydrophobic foam as disclosed herein or may have a body made of polymer, glass or ceramic and a surface layer made of the hydrophobic foam.

In effect, the present invention provides mineral separation techniques using synthetic beads made of the hydrophobic foam, including size-, weight-, density- and magnetic-based synthetic beads.

There may be a mixture of both air and lightweight synthetic beads. The lightweight synthetic beads may be used to lift the valuable material and the air may be used to create the desired froth layer in order to achieve the desired material grade.

A bead recovery process is also developed to enable the reuse of the lightweight synthetic beads in a closed loop process. This process may consist of a washing station whereby the valuable mineral is mechanically, chemically, thermally or electromagnetically removed from the lightweight beads or bubbles. In particular, the removal process may be carried out by way of controlling the pH value of the medium in which the enriched polymer beads or bubbles are embedded, controlling the temperature of the medium, applying mechanical or sonic agitation to the medium, illuminating the enriched polymer beads with light of a certain range of frequencies, or applying electromagnetic waves on the enriched polymer beads in order to weaken the bonds between the valuable material and the surface of the synthetic beads made of the hydrophobic foam, according to the present invention.

In all these embodiments, the synthetic beads are made of the hydrophobic three-dimensional open-cell structure which is a reaction product of a particular isocyanate and a particular polyol in the presence of a hydrophobic surfactant, as described above.

### BRIEF DESCRIPTION OF THE DRAWING

Referring now to the drawing, which is not necessarily drawn to scale, the foregoing and other features and advantages of the present invention will be more fully understood from the following detailed description of illustrative embodiments, taken in conjunction with the accompanying drawing in which like elements are numbered alike:
Figure 1 is a diagram of a flotation system, process or apparatus according to some embodiments of the present invention.
Figure 2 is a diagram of a flotation cell or column that may be used in place of the flotation cell or column that forms part of the flotation system, process or apparatus shown in Figure 1 according to some embodiments of the present invention.
Figure 3 is a diagram of a bead recovery processor in which the valuable material is thermally removed from the engineered collection media according to the present invention in the form of polymer bubbles or beads.
Figure 4 is a diagram of a bead recovery processor in which the valuable material is sonically removed from the engineered collection media according to the present invention in the form of polymer bubbles or beads.
Figure 5 is a diagram of a bead recovery processor in which the valuable material is chemically removed from the engineered collection media according to the present invention in the form of polymer bubbles or beads.
Figure 6 is a diagram of a bead recovery processor in which the valuable material is electromagnetically removed from the engineered collection media according to the present invention in the form of polymer bubbles or beads.,
Figure 7 is a diagram of a bead recovery processor in which the valuable material is mechanically removed from the engineered collection media according to the present invention in the form of polymer bubbles or beads.
Figure 8 is a diagram of a bead recovery processor in which the valuable material is removed from the engineered collection media according to the present invention in the form of polymer bubbles or beads in two or more stages.
Figure 9 is a diagram of an apparatus using counter-current flow for mineral separation, according to some embodiments of the present invention.
Figure 10a illustrates a collection media taking the form of an open-cell foam in a cubic shape.
Figure 10b illustrates a filter according to some embodiments of the present invention.
Figure 10c illustrates a section of a membrane or conveyor belt according to an embodiment of the present invention.
Figure 10d illustrates a section of a membrane or conveyor belt according to another embodiment of the present invention.
Figure 11 illustrates a separation processor configured with a conveyor belt arranged therein according to some embodiments of the present invention.
Figure 12 illustrates a separation processor configured with a filter assembly according to some embodiments of the present invention.
Figure 13 illustrates a co-current tumbler cell configured to enhance the contact between the collection media and the mineral particles in a slurry, according to some embodiments of the present invention.
Figure 14 illustrates a cross-current tumbler cell configured to enhance the contact between the collection media and the mineral particles in a slurry, according to some embodiments of the present invention.
Figure 15a illustrates a synthetic bead having a body made of the hydrophobic foam, according to some embodiments of the present invention.
Figure 15b illustrates a synthetic bead having a body with a surface layer made of the hydrophobic foam, according to some embodiments of the present invention.
Figure 16 is a picture showing reticulated foam with Cu Mineral entrained throughout the structure.

### DETAILED DESCRIPTION OF THE INVENTION

The present invention provides a hydrophobic foam which can be used as synthetic beads, filters, conveyor belts or any collection substrates for attracting mineral particles in an aqueous slurry. In particular, the hydrophobic foam is a reticulated foam, an open-network structure or three-dimensional open-cell structure made from a hydrophobic material, which is a reaction product of a particular isocyanate and a particular polyol in the presence of a hydrophobic surfactant.

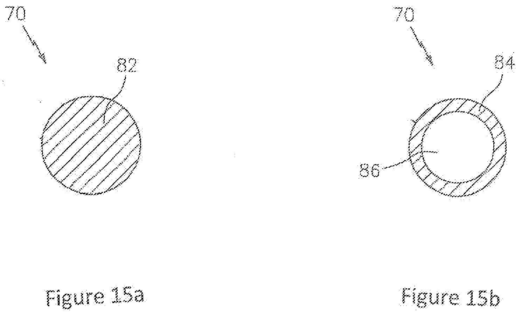

As used herein, the reaction product of isocyanate and polyol described above having the open-network structure, reticulated structure or three-dimensional open-cell structure is also referred as the hydrophobic foam. The engineered collection medium made of the hydrophobic foam taking the form of a cube or sphere is also referred to as synthetic bead or polymer bubble. For example, Figure 15a illustrates a synthetic bead having a body entirely made of the hydrophobic foam, according to some embodiments of the present invention. Figure 15b illustrates a synthetic bead having a surface layer made of the hydrophobic foam, according to some embodiments of the present invention, whereas the core of the synthetic bead is made of a different material.

### Figures 10a - 10d

As described above in conjunction with Figures 15a and 15b, the synthetic bead 70 can be a cube or sphere and has a hydrophobic surface layer made of the hydrophobic foam, according to present invention. According to some embodiments of the present invention, the hydrophobic foam can take the form of a filter, a membrane or a conveyor belt as described in WO 2012/162 591 A1. Therefore, the synthetic beads described herein are generalized as engineered collection media. Likewise, the hydrophobic foam may be generalized as a material with three-dimensional open-cellular structure, an open-cell foam or reticulated foam. The synthetic bead may have a core made from soft polymers, hard plastics, ceramics, carbon fibers, glass and/or metals, but the surface layer is made of the hydrophobic foam, according to the present invention.

Open-cell foam or reticulated foam offers an advantage over non-open cell materials by having higher surface area to volume ratio. When the foam is made of the particular reaction product of an isocyanate and polyol, according to the present invention, it promotes attachment of mineral to the foam "network", enables higher mineral recovery rates and also improves recovery of less liberated mineral than conventional process. For example, the open cells in an engineered foam block allow passage of fluid and particles smaller than the cell size but capture mineral particles that come in contact with the open cells. This also allows the selection of cell size dependent upon slurry properties and application.

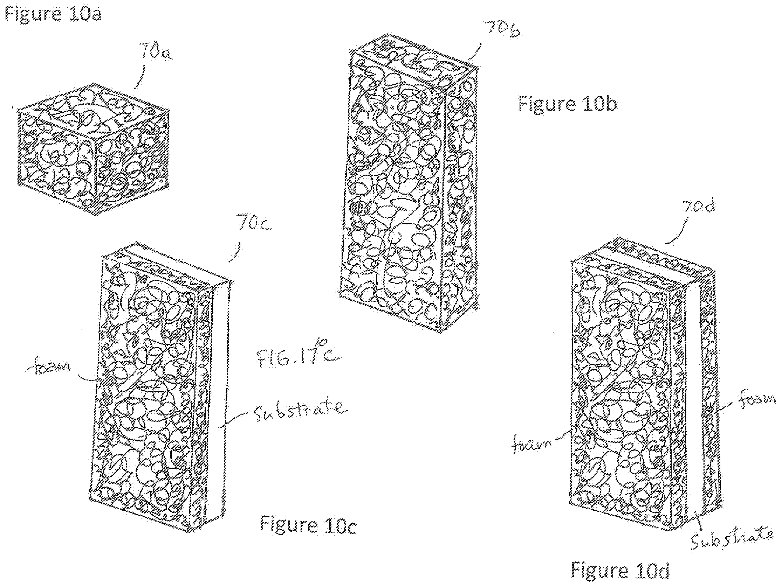

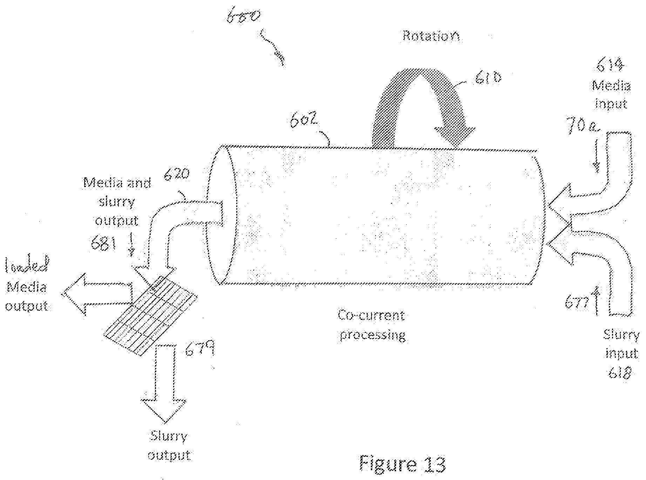

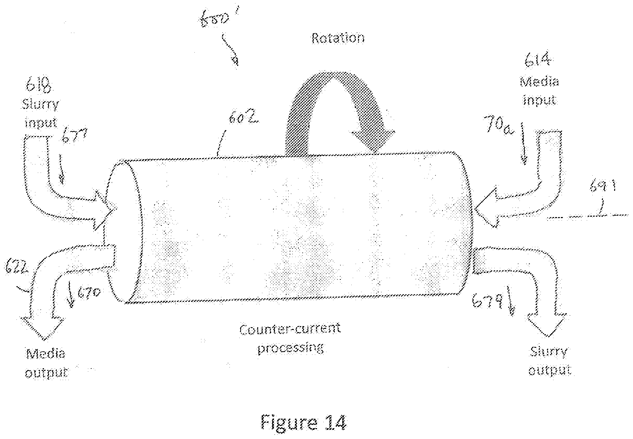

According to some embodiments of the present invention, the engineered collection media take the form of an open-cell foam/ structure in a rectangular block or a cubic shape 70a as illustrated in Figure 10a. When the collection media are mixed with the slurry for mineral recovery, it is advantageous to use the tumbler cells as shown in Figures 13 and 14. These tumbler cells have been disclosed in PCT application serial no. WO 2017/117200 A1.

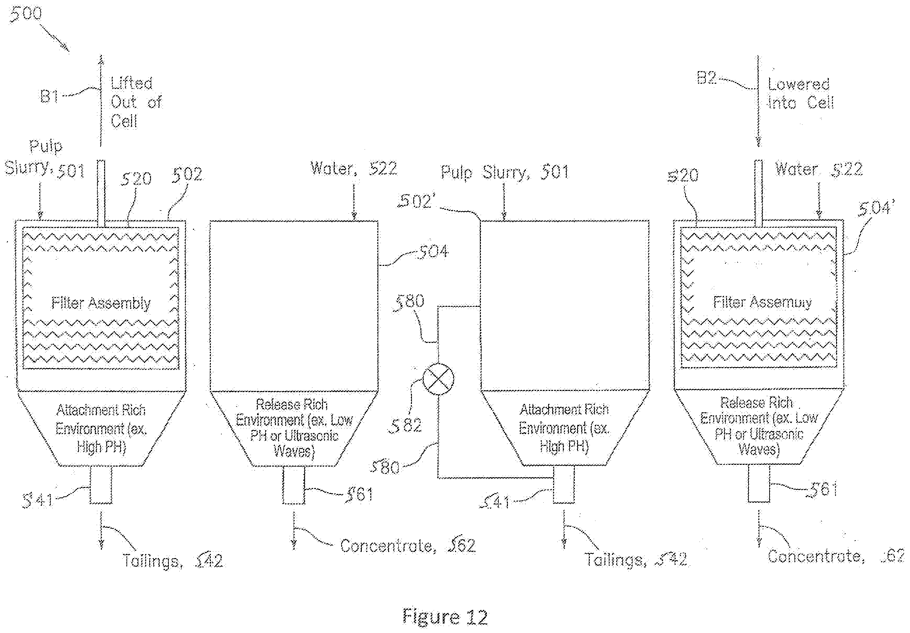

According to some embodiments of the present invention, the engineered collection media may take the form of a filter 70b with a three-dimensional open-cell structure as shown in Figure 10b. The filter 70b can be used in a filtering assembly as shown in Figure 12, for example.

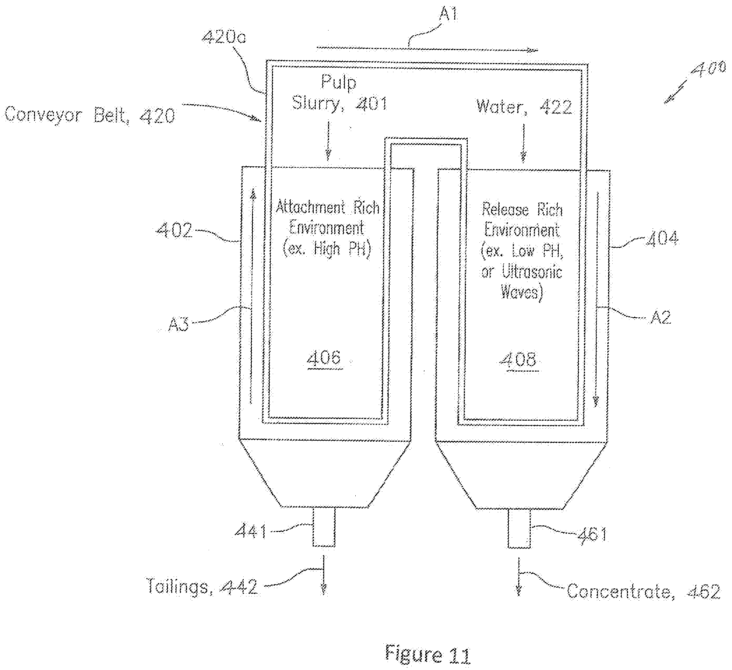

According some embodiments of the present invention, the engineered collection media may take the form of a membrane 70c, a section of which is shown in Figure 10c. As seen in Figure 10c, the membrane 70c can have an open-cell foam layer attached to a substrate or base. The substrate can be made from a material which is less porous than the open-cell foam layer. For example, the substrate can be a sheet of pliable polymer to enhance the durability of the membrane. The membrane 70c can be used as a conveyor belt as shown in Figure 11, for example.

According some embodiments of the present invention, the engineered collection media may take the form of a membrane 70d, a section of which is shown in Figure 10d. As seen in Figure 10d, the membrane 70d can have two open-cell foam layers attached to two sides of a substrate or base. The substrate can made of a material which is less porous than the open-cell foam layer. The membrane 70d can also be used as a conveyor belt as shown in Figure 11, for example.

In the present invention, the engineered collection media as shown in Figures 10a-10d includes, or takes the form of, a solid-phase body configured with a three-dimensional open-cell structure to provide a plurality of collection surfaces for attracting one or more mineral particles in an aqueous mixture to the collection surfaces.

In some embodiments of the present invention, the solid phase body may have a core made from a material selected from polyester urethane, polyether urethane, reinforced urethanes, PVC coated PV, silicone, polychloroprene, polyisocyanurate, polystyrene, polyolefin, polyvinylchloride, epoxy, latex, fluoropolymer, polypropylene, phenolic, EPDM, and nitrile. The solid-phase body has a hydrophobic surface layer made of the hydrophobic foam, according to the present invention.

In some embodiments of the present invention, the solid phase body may be modified with tackifiers, plasticizers, crosslinking agents, chain transfer agents, chain extenders, adhesion promoters, aryl or alky copolymers, fluorinated copolymers, hexamethyldisilazane, silica or hydrophobic silica.

In some embodiments of the present invention, the solid phase body may include a core made of a material selected from acrylics, butyl rubber, ethylene vinyl acetate, natural rubber, nitriles; styrene block copolymers with ethylene, propylene, and isoprene, and polyvinyl ethers.

In some embodiments of the present invention, an adhesion agent may be provided between the solid phase body and the hydrophobic surface layer so as to promote adhesion between the core and the hydrophobic surface layer made of the hydrophobic foam.

In some embodiments of the present invention, the solid phase body may have a core made of plastic, ceramic, carbon fiber or metal, with a hydrophobic surface layer made of the hydrophobic foam, according to the present invention.

In some embodiments of the present invention, the three-dimensional open-cell structure may include pores ranging from 3.9 to 78.7 pores per cm (10-200 pores per inch).

In some embodiments of the present inventions, the engineered collection media may be encased in a cage structure that allows a mineral-containing slurry to pass through the cage structure so as to facilitate the contact between the mineral particles in slurry and the engineered collection media.

In some embodiments of the present invention, the cage structures or the filters carrying mineral particles may be removed from the processor so that they can be stripped of the mineral particles, cleaned and reused.

### Figure 1

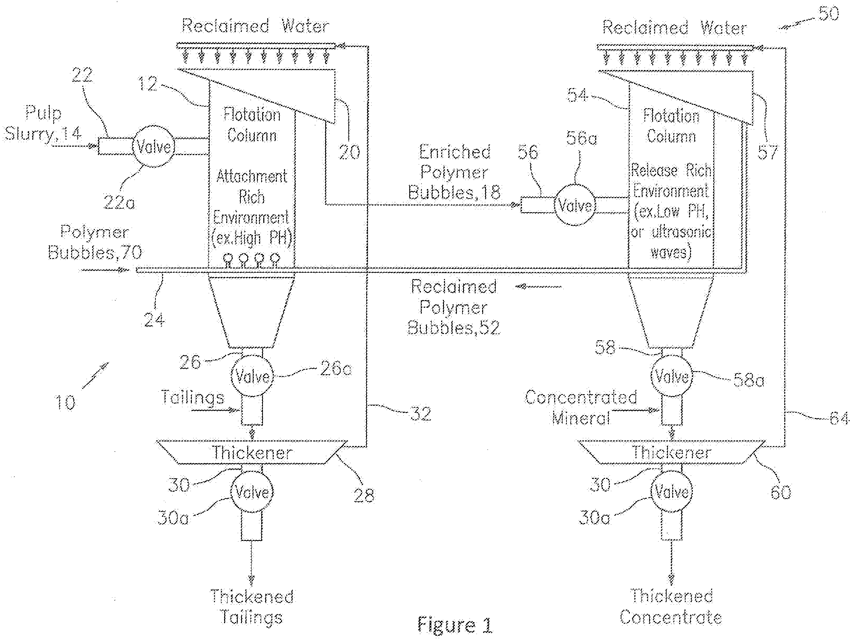

By way of example, Figure 1 shows the present invention in the form of an apparatus 10, comprising one or more collection media according to the present invention. The apparatus has a flotation cell or column 12 configured to receive a mixture of fluid (e.g. water), valuable material and unwanted material, e.g., a pulp slurry 14; receive engineered collection media in the form of synthetic bubbles or beads 70 that are constructed to be buoyant when submerged in the pulp slurry or mixture 14 and be hydrophobic to attach to the valuable material in the pulp slurry or mixture 14; and provide enriched synthetic beads 18 having the valuable material attached thereon. The terms "synthetic bubbles or beads" and "polymer bubbles or beads" are used interchangeably in this disclosure. Also, the terms "polymer bubbles" and "synthetic beads" are synonymous with the "engineered collection media" made of the hydrophobic foam in a cube or spherical form, according to the present invention. The terms "valuable material", "valuable mineral" and "mineral particle" are also used interchangeably. By way of example, the synthetic beads 70 may be cubes or spheres made entirely from a hydrophobic material which is a reaction product of isocyanate and polyol and have an open-network structure, reticulated foam structure or three-dimensional open-cell structure. The hydrophobic material is also referred to as a hydrophobic foam. The synthetic beads 70 may have a core made of polymer or polymer-based materials, or silica or silica-based materials, or glass or glass-based materials, and a surface layer made of the hydrophobic foam, according to the present invention. For the purpose of describing one example of the present invention, in Figure 1 the synthetic beads 70 and the enriched synthetic beads 18 are shown. The flotation cell or column 12 is configured with a top portion or piping 20 to provide the enriched synthetic beads 18 from the flotation cell or column 12 for further processing consistent with that set forth herein.

The flotation cell or column 12 may be configured with a top part or piping 22, e.g., having a valve 22a, to receive the pulp slurry or mixture 14 and also with a bottom part or piping 24 to receive the synthetic beads 70. In operation, the buoyancy of the synthetic beads 70 causes them to float upwardly from the bottom to the top of the flotation cell or column 12 through the pulp slurry or mixture 14 in the flotation cell or column 12 so as to collide with the water, valuable material and unwanted material in the pulp slurry or mixture 14. The hydrophobicity of the synthetic beads 70 causes them to attach to the valuable material in the pulp slurry or mixture 14. As being made of a hydrophobic foam, the synthetic beads 70 attract the valuable material to the surface structure, so that the valuable material is lifted through the cell or column 12 due to the buoyancy of the synthetic beads 70. As a result of the collision between the synthetic beads 70 and the water, valuable material and unwanted material in the pulp slurry or mixture 14, and the attachment of the synthetic beads 70 and the valuable material in the pulp slurry or mixture 14, the enriched synthetic beads 18 having the valuable material attached thereto will float to the top of the flotation cell 12 and form part of the froth formed at the top of the flotation cell 12. The flotation cell 12 may include a top part or piping 20 configured to provide the enriched synthetic beads 18 having the valuable material attached thereto, which may be further processed consistent with that set forth herein. In effect, the enriched synthetic beads 18 may be taken off the top of the flotation cell 12 or may be drained off by the top part or piping 20.

The flotation cell or column 12 may be configured to contain an attachment rich environment, including where the attachment rich environment has a high pH, so as to encourage the flotation recovery process therein. The flotation recovery process may include the recovery of ore particles in mining, including copper. The scope of the invention is not intended to be limited to any particular type or kind of flotation recovery process. The scope of the invention is also not intended to be limited to any particular type or kind of mineral of interest that may form part of the flotation recovery process.

According to some embodiments of the present invention, the synthetic beads 70 may be configured with a surface area flux by controlling some combination of the size of the polymer or polymer-based bubbles and/or the injection rate that the pulp slurry or mixture 14 is received in the flotation cell or column 12. The synthetic beads 70 may also be configured with a low density so as to behave like air bubbles. The synthetic beads 70 may also be configured with a controlled size distribution of medium that may be customized to maximize recovery of different feed matrixes to flotation as valuable material quality changes, including as ore quality changes.

According to some embodiments of the present invention, the flotation cell or column 12 may be configured to receive the synthetic beads 70 together with air, where the air is used to create a desired froth layer in the mixture in the flotation cell or column 12 in order to achieve a desired grade of valuable material. The synthetic beads 70 may be configured to lift the valuable material to the surface of the mixture in the flotation cell or column.

### The Thickener 28

The apparatus 10 may also include piping 26 having a valve 26a for providing tailings to a thickener 28 configured to receive the tailings from the flotation cell or column 12. The thickener 28 includes piping 30 having a valve 30a to provide thickened tailings. The thickener 28 also includes suitable piping 32 for providing reclaimed water back to the flotation cell or column 12 for reuse in the process. Thickeners like element 28 are known in the art.

### The Bead Recovery Process or Processor 50

According to the present invention, the apparatus 10 further includes a bead recovery process or processor generally indicated as 50 configured to receive the enriched synthetic beads 18 and provide reclaimed synthetic beads 52 without the valuable material attached thereon so as to enable the reuse of the synthetic beads 52 in a closed loop process. By way of example, the bead recovery process or processor 50 may take the form of a washing station whereby the valuable mineral is mechanically, chemically, or electro-statically removed from the enriched synthetic beads 18.

The bead recovery process or processor 50 may include a releasing apparatus in the form of a second flotation cell or column 54 having piping 56 with a valve 56a configured to receive the enriched synthetic beads 18; and substantially release the valuable material from the synthetic beads 18, and also having a top part or piping 57 configured to provide the reclaimed synthetic beads 52, substantially without the valuable material attached thereon The second flotation cell or column 54 may be configured to contain a release rich environment, including where the release rich environment has a low pH, or including where the release rich environment results from ultrasonic waves pulsed into the second flotation cell or column 54.

The bead recovery process or processor 50 may also include piping 58 having a valve 56a for providing concentrated minerals to a thickener 60 configured to receive the concentrated minerals from the flotation cell or column 54. The thickener 60 includes piping 62 having a valve 62a to provide thickened concentrate. The thickener 60 also includes suitable piping 64 for providing reclaimed water back to the second flotation cell or column 54 for reuse in the process. Thickeners like element 60 are known in the art.

Embodiments are also envisioned in which the enriched synthetic beads are placed in a chemical solution so the valuable material is dissolved off, or are sent to a smelter where the valuable material is burned off, including where the synthetic beads are reused afterwards.

### Figure 2

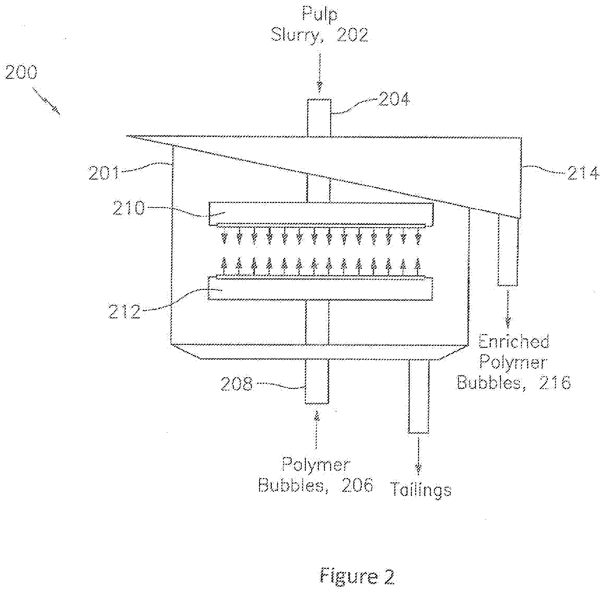

Figure 2 shows alternative apparatus generally indicated as 200 in the form of an alternative flotation cell 201 that is based at least partly on a collision technique between the mixture and the synthetic beads, according to some embodiments of the present invention. The mixture 202, e.g. the pulp slurry, may be received in a top part or piping 204, and the synthetic beads 206 may be received in a bottom part or piping 208. The flotation cell 201 may be configured to include a first device 210 for receiving the mixture 202, and also may be configured to include a second device 212 for receiving the polymer-based materials. The first device 210 and the second device 212 are configured to face towards one another so as to provide the mixture 202 and the synthetic beads 206, using the collision technique. In Figure 2, the arrows 210a represent the mixture being sprayed, and the arrows 212a represent the synthetic beads 206 being sprayed towards one another in the flotation cell 201.

In operation, the collision technique causes vortices and collisions using enough energy to increase the probability of touching of the synthetic beads 206 and the valuable material in the mixture 202, but not too much energy to destroy bonds that form between the synthetic beads 206 and the valuable material in the mixture 202. Pumps, not shown, may be used to provide the mixture 202 and the synthetic beads 206 at the appropriate pressure in order to implement the collision technique.

By way of example, the first device 210 and the second device 212 may take the form of shower-head like devices having a perforated nozzle with a multiplicity of holes for spraying the mixture and the synthetic beads towards one another. As a result of the collision between the synthetic beads 206 and the mixture, enriched synthetic beads having the valuable material attached thereto will float to the top and form part of the froth in the flotation cell 201. The flotation cell 201 may include a top part or piping 214 configured to provide enriched synthetic beads 216 having the valuable material attached thereto, which may be further processed consistent with that set forth herein.

The alternative apparatus 200 may be used in place of the flotation columns or cells, and inserted into the apparatus or system shown in Figure 1, and may prove to be more efficient than using the flotation columns or cells.

### Figures 3-8

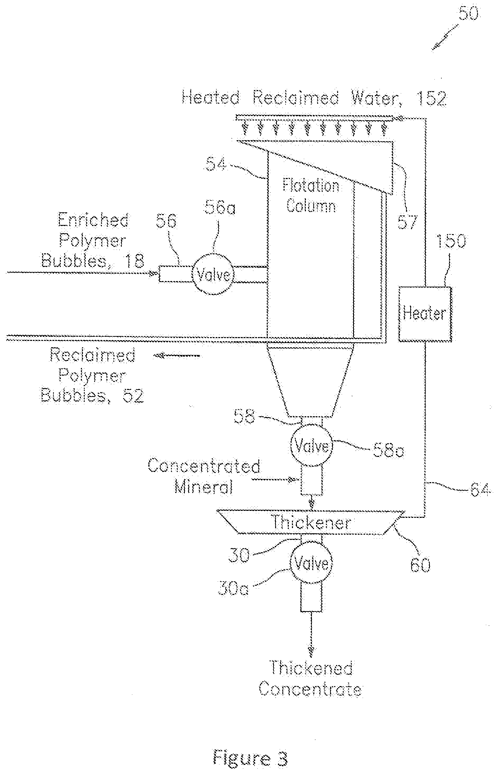

The method of the present invention includes a step of applying interruption forces to the engineered collection medium carrying mineral particles so as to remove the mineral particles from the collection surfaces. Figures 3 to 8 illustrate that the valuable minerals can be mechanically, chemically, thermally, optically or electromagnetically removed or released from the enriched collection media in the form of enriched synthetic beads.

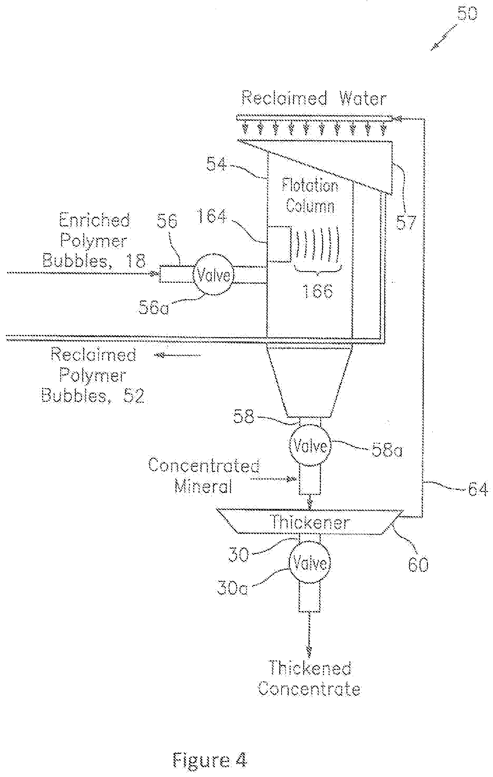

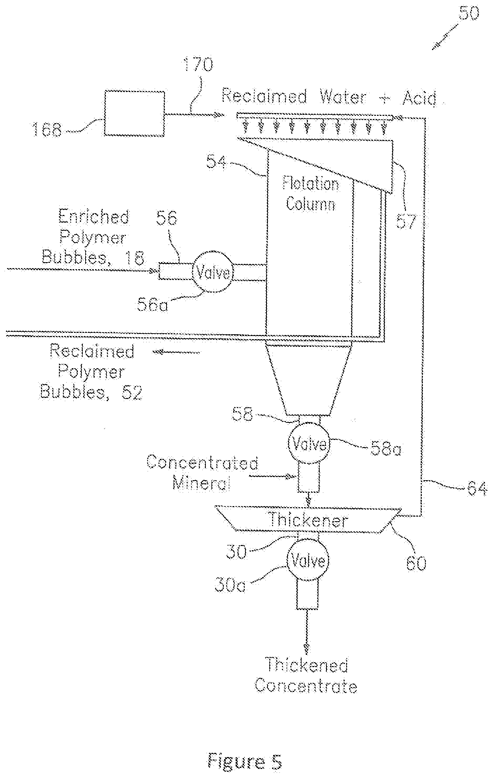

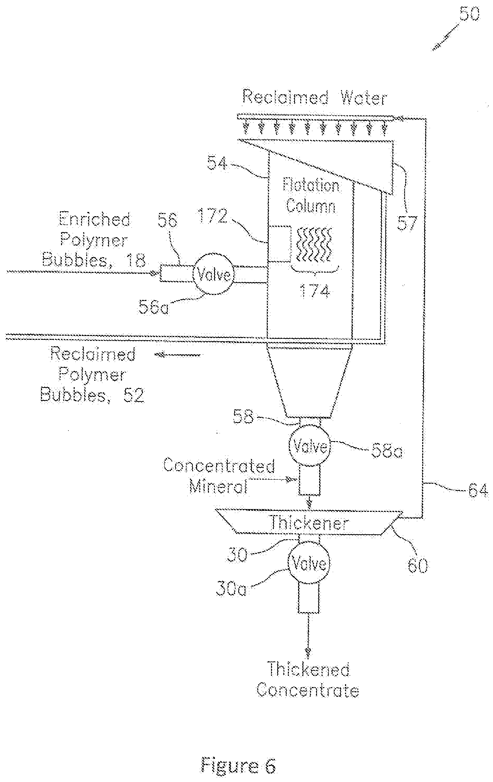

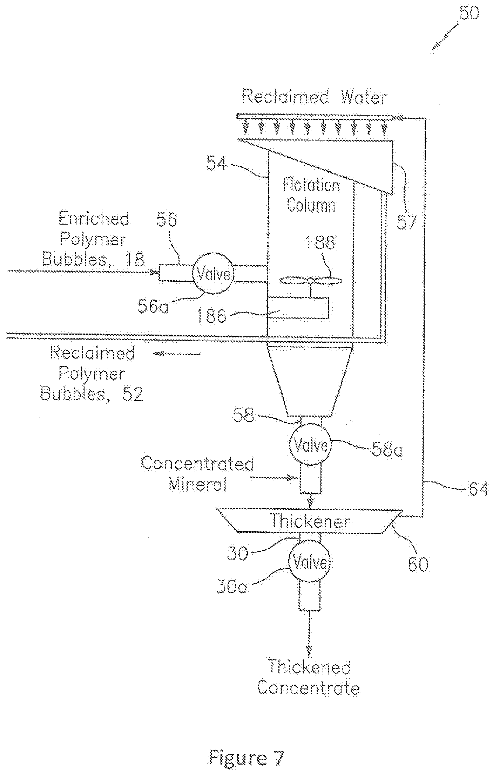

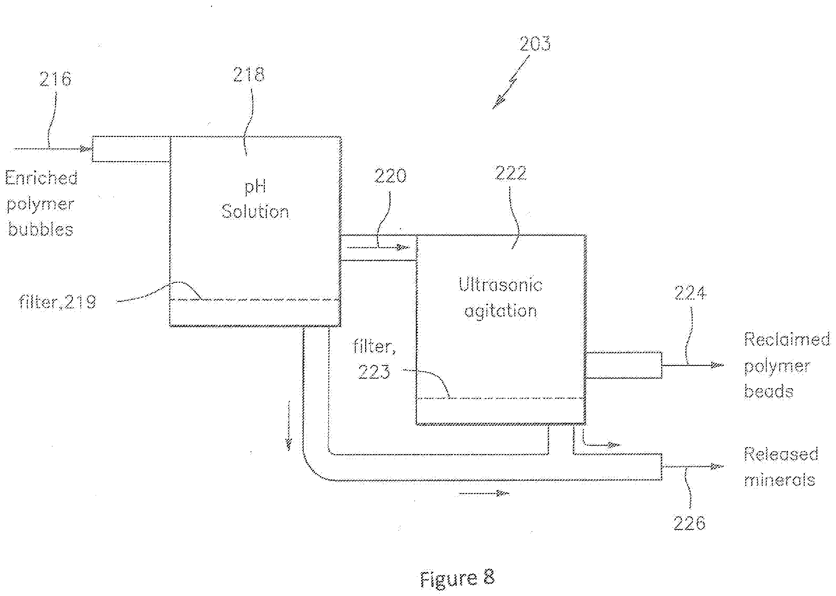

By way of example, the bead recovery process or processor 50 as shown in Figure 1 can be adapted for the removal of valuable minerals from the enriched synthetic beads in different ways. The releasing apparatus may include, or take the form of, a heater 150 (Figure 3) configured to provide thermal heat for the removal of the valuable minerals from the enriched synthetic beads; an ultrasonic wave producer 164 (Figure 4) configured to provide an ultrasonic wave for the removal of valuable minerals from the enriched synthetic beads, a container 168 (Figure 5) configured to provide an acid or acidic solution 170 for the removal of the valuable minerals from the enriched synthetic beads; a microwave source 172 (Figure 6) configured to provide microwaves for the removal of the valuable minerals from the enriched synthetic beads, a motor 186 and a stirrer 188 (Figure 7) configured to stir the enriched synthetic beads for the removal of the valuable minerals from the enriched synthetic beads; and multiple release or recovery processors (Figure 8) configured to use multiple release or recovery techniques for the removal of the valuable minerals from the enriched synthetic beads. According to some embodiments of the present invention, the aforementioned releasing apparatus may be responsive to signaling, e.g., from a controller or control processor. In view of the aforementioned, and by way of example, the releasing techniques are set forth in detail below:

### Sonically Releasing Valuable Material

When ultrasonic waves are applied in a solution or mixture containing the enriched synthetic beads, they can cause the attached mineral particles to move rapidly against the surface of the synthetic beads, thereby shaking the mineral particles loose from the surface. It is known that ultrasound is a cyclic sound pressure with a frequency greater than the upper limit of human hearing. Thus, in general, ultrasound goes from just above 20 kilohertz (KHz) all the way up to about 300KHz. In ultrasonic cleaners, low frequency ultrasonic cleaners have a tendency to remove larger particle sizes more effectively than higher operational frequencies. However, higher operational frequencies tend to produce a more penetrating scrubbing action and to remove particles of a smaller size more effectively. In mineral releasing applications involving mineral particles finer than 100µm to 1mm or larger, according to some embodiments of the present invention, the ultrasonic wave frequencies range from 10Hz to 10MHz. By way of example, the bead recovery process or processor 50 as shown in Figure 1 can be adapted for removing the mineral particles in the enriched synthetic beads 18 by applying ultrasound to the solution in the flotation column 54. For example, as the reclaimed water from piping 64 is used to wash the enriched synthetic bubbles 18 inside the flotation column 54, it is possible to use an ultrasonic wave producer 164 to apply the ultrasound 166 in order to release the valuable material from the enriched synthetic beads 18. A diagram illustrating the ultrasonic application is shown in Figure 4.

### Chemically Releasing Valuable Material

In physisorption, the valuable minerals are reversibly associated with the synthetic bubbles or beads, attaching due to electrostatic attraction, and/or van der Waals bonding, and/or hydrophobic attraction, and/or adhesive attachment. The physisorbed mineral particles can be desorbed or released from the surface of the synthetic beads if the pH value of the solution changes. Furthermore, the surface chemistry of the most minerals is affected by the pH. Some minerals develop a positive surface charge under acidic conditions and a negative charge under alkaline conditions. The effect of pH changes is generally dependent on the collector and the mineral collected. For example, chalcopyrite becomes desorbed at a higher pH value than galena, and galena becomes desorbed at a higher pH value than pyrite. If the valuable mineral is collected at a pH of 8 to 11, it is possible to weaken the bonding between the valuable mineral and the surface of the synthetic beads by lower the pH to 7 and lower. However, an acidic solution having a pH value of 5 or lower would be more effective in releasing the valuable mineral from the enriched synthetic beads. According to one embodiment of the present invention, the bead recovery process or processor 50 as shown in Figure 1 can be adapted for removing the mineral particles in the enriched synthetic beads 18 by changing the pH of the solution in the flotation column 54. For example, as the reclaimed water from piping 64 is used to wash the enriched synthetic bubbles 18 inside the flotation column 54, it is possible to use a container 168 to release an acid or acidic solution 170 into the reclaimed water as shown in Figure 5. There are a number of acids easily available for changing the pH. For example, sulfuric acid (HCl), hydrochloric acid (H₂SO₄), nitric acid (HNO₃), perchloric acid (HClO₄), hydrobromic acid (HBr) and hydroiodic acid (HI) are among the strong acids that completely dissociate in water. However, sulfuric acid and hydrochloric acid can give the greater pH change at the lowest cost. The pH value used for mineral releasing ranges from 7 to 0. Using a very low pH may cause the synthetic beads to degrade. It should be noted that, however, when the valuable material is copper, for example, it is possible to provide a lower pH environment for the attachment of mineral particles and to provide a higher pH environment for the releasing of the mineral particles from the synthetic beads or bubbles.

In general, the pH value is chosen to facilitate the strongest attachment, and a different pH value is chosen to facilitate release. Thus, according to some embodiments of the present invention, one pH value is chosen for mineral attachment, and a different pH value is chosen for mineral releasing. The different pH could be higher or lower, depending on the specific mineral and collector.

The physisorbed mineral particles can be desorbed or released from the surface of the synthetic beads if a surface active agent is introduced which interferes with the attachment of the mineral particles and the bead surface. In one embodiment, when the surface active agent is combined with mechanical energy, the particle easily detaches from the surface.

### Electromagnetically Releasing Valuable Material

More than one way can be used to interrupt the attachment of the mineral particles to the synthetic beads electromagnetically. For example, it is possible to use microwaves to heat up the enriched synthetic beads and the water in the flotation column. Thus, it is possible to provide a microwave source where the enriched synthetic bubbles are processed. By way of example, the bead recovery process or processor 50 as shown in Figure 1 can be adapted for removing the mineral particles in the enriched synthetic bubbles 18 by using an electromagnetic source to provide electromagnetic waves to the solution or mixture in the flotation column 54. For example, as the reclaimed water from piping 64 is used to wash the enriched synthetic bubbles 18 inside the flotation column 54, it is possible to use a microwave source 172 to apply the microwave beam 174 in order to release the valuable material from the enriched synthetic beads 18. A diagram illustrating the ultrasonic application is shown in Figure 6.

### Mechanically Releasing Valuable Material

When the enriched synthetic bubbles or beads are densely packed such that they are in a close proximity to each other, the rubbing action among adjacent synthetic bubbles or beads may cause the mineral particles attached to the enriched synthetic beads to be detached. By way of example, the bead recovery process or processor 50 as shown in Figure 1 can be adapted for removing the mineral particles in the enriched synthetic beads 18 mechanically. For example, a motor 186 and a stirrer 188 are used to move the enriched synthetic beads around, causing the enriched synthetic beads 18 inside the flotation column 54 to rub against each other. If the synthetic beads are magnetic, the stirrer 188 can be a magnetic stirrer. A diagram illustrating a mechanical release of valuable material is shown in Figure 7.

### Other Types or Kinds of Release Techniques

A heater like element 150 (Figure 3), an ultrasonic wave producer like element 164 (Figure 4), a container like element 168 (Figure 5), a microwave source like element 172 (Figure 6), a motor and stirrer like elements 186 188 (Figure 7) are known in the art, and can be used in the method of the present invention.

### Multi-Stage Removal of Valuable Material

More than one of the methods for releasing the valuable material from the enriched synthetic beads can be used in the same bead recovery process or processor at the same time. For example, while the enriched synthetic beads 18 are subjected to ultrasonic agitation (see Figure 4), the reclaimed water can also be heated by a water heater, such as a heater 150 as depicted in Figure 3. Furthermore, an acidic solution can be also added to the water to lower the pH in the flotation column 54. In a different embodiment of the present invention, same or different releasing methods are used sequentially in different stages. By way of example, the enriched polymer bubbles 216 from the separation apparatus 200 (see Figure 2) can be processed in a multi-stage processor 203 as shown in Figure 8. The apparatus 200 has a first recovery processor 218 where an acidic solution is used to release the valuable material at least partially from the enriched synthetic beads 216. A filter 219 is used to separate the released mineral 226 from the synthetic beads 220. At a second recovery processor 222, an ultrasound source is used to apply ultrasonic agitation to the synthetic beads 220 in order to release the remaining valuable material, if any, from the synthetic beads. A filter 223 is used to separate the released mineral 226 from the reclaimed synthetic beads 224. It is understood that more than two processing stages can be carried out and different combinations of releasing methods are possible.

### Figure 9

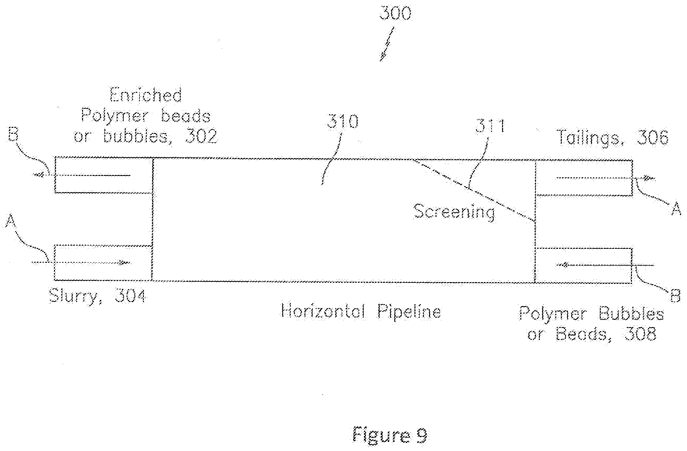

According to some embodiments of the present invention, the separation process can be carried out in a horizontal pipeline as shown in Figure 9. As shown in Figure 9, the synthetic beads 308 may be used in, or form part of, a size-based separation process using countercurrent flows with mixing implemented in apparatus such as a horizontal pipeline generally indicated as 300. In Figure 9, the horizontal pipeline 310 is configured with a screen 311 to separate the enriched synthetic beads 302 having the valuable material attached thereto from the mixture based at least partly on the difference in size. The horizontal pipeline 310 may be configured to separate the enriched synthetic beads 302 having the valuable material attached thereto from the mixture using countercurrent flows with mixing, so as to receive in the horizontal pipeline 310 slurry 304 flowing in a first direction A, receive in the horizontal pipeline 300 synthetic beads 308 flowing in a second direction B opposite to the first direction A, provide from the horizontal pipeline 308 the enriched synthetic beads 302 having the valuable material attached thereto and flowing in the second direction B, and provide from the horizontal pipeline 310 waste or tailings 306 that is separated from the mixture using the screen 311 and flowing in the second direction B. In a horizontal pipeline 310, it is not necessary that the synthetic beads 308 be lighter than the slurry 304. The density of the synthetic beads 308 can be substantially equal to the density of the slurry 304 so that the synthetic beads can be in a suspension state while they are mixed with slurry 304 in the horizontal pipeline 310.

### Figure 11

By way of example, Figure 11 shows the present invention in the form of a machine, device, system or apparatus 400 for separating valuable material from unwanted material in a mixture 401, such as a pulp slurry, using a first processor 402 and a second processor 404. The first processor 402 and the second processor 404 configured with an engineered collection medium according to the invention in the form of a conveyor belt 420 that runs between the first processor 402 and the second processor 404. The conveyor belt 420 can be entirely made of the hydrophobic foam or have a surface layer made of the hydrophobic foam, according to the present invention. The arrows A1, A2, A3 indicate the movement of the conveyor belt 420. Techniques, including motors, gearing, etc., for running a conveyor belt like element 420 between two processors like elements 402 and 404 are known in the art, and the scope of the invention is not intended to be limited to any particular type or kind thereof. According to some embodiments of the present invention, the conveyor belt 420 may include a layer structure as shown in Figures 10c or 10d.

The first processor 402 may take the form of a first chamber, tank, cell or column that contains an attachment rich environment generally indicated as 406. The first chamber, tank or column 402 may be configured to receive the mixture or pulp slurry 401 in the form of fluid (e.g., water), the valuable material and the unwanted material in the attachment rich environment 406, e.g., which has a high pH, conducive to attachment of the valuable material. The second processor 404 may take the form of a second chamber, tank, cell or column that contains a release rich environment generally indicated as 408. The second chamber, tank, cell or column 404 may be configured to receive, e.g., water 422 in the release rich environment 408, e.g., which may have a low pH or receive ultrasonic waves conducive to release of the valuable material. Alternatively, a surfactant may be used in the release rich environment 408 to detach the valuable material from the conveyor belt 420 under mechanical agitation or sonic agitation, for example. Sonic agitation can be achieved by a sonic source such as the ultrasonic wave producer 164 as shown in Figure 4. Mechanical agitation can be achieved by a stirring device such as the stirrer 188 as shown in Figure 7 or by a brush (not shown) caused to rub against the surface of the conveyor belt 420 while the conveyor belt 420 is moving through the release rich environment.

In operation, the first processor 402 may be configured to receive the mixture or pulp slurry 401 of water, valuable material and unwanted material and the conveyor belt 420 that may be configured to attach to the valuable material in the attachment rich environment 406. In Figure 11, the belt 420 is understood to be configured with a layer of the hydrophobic foam, according to the present invention, to attach to the valuable material in the attachment rich environment 406.

The first processor 402 may also be configured to provide drainage from piping 441 of, e.g., tailings 442 as shown in Figure 11. The second processor 404 may also be configured to provide the valuable material that is released from the enriched conveyor belt into the release rich environment 408. For example, in Figure 11 the second processor 404 is shown configured to provide via piping 461 drainage of the valuable material in the form of a concentrate 462.

### Figure 12

By way of example, Figure 12 shows the present invention in the form of a machine, device, system or apparatus 500, e.g., for separating valuable material from unwanted material in a mixture 501, such as a pulp slurry, using a first processor 502, 502' and a second processor 504, 504'. In Fig. 12, the first processor 502 and the second processor 504 are configured to process a hydrophobic member that is shown as a filter 520 configured to be moved between the first processor 502 and the second processor 504 as shown in Figure 12 as part of a batch type process, according to some embodiments of the present invention. In Figure 12, and by way of example, the batch type process is shown as having two first processor 502, 502' and second processor 504, 504, although the scope of the invention is not intended to be limited to the number of first or second processors. According to some embodiments of the present invention, the collection filter 520 may take the form of an engineered collection media having an open-cell structure or made of a foam block as shown in Figure 10b. The arrow B1 indicates the movement of the collection filter 520 from the first processor 502, and the arrow B2 indicates the movement of the collection filter 520 into the second processor 502. Techniques, including motors, gearing, etc., for moving a filter like element 520 from one processor to another processor like elements 502 and 504 are known in the art, and the scope of the invention is not intended to be limited to any particular type or kind thereof. In the apparatus as shown in Figure 12, the collection filter has at least a layer of the hydrophobic foam, according to the present invention.

The first processor 502 may take the form of a first chamber, tank, cell or column that contains an attachment rich environment which has a high pH, conducive to attachment of the valuable material. The second processor 504 may take the form of a second chamber, tank, cell or column that contains a release rich environment which may have a low pH or receive ultrasonic waves conducive to release of the valuable material. Alternatively, the second process 504 may be configured as a stripping tank where a surfactant is used to release the valuable material from the filter 522 under mechanical agitation or sonic agitation, for example.

The first processor 502 may also be configured to provide drainage from piping 541 of, e.g., tailings 542 as shown in Figure 12. The second processor 504 may be configured to receive the fluid 522 (e.g. water) and the enriched collection filter 520 to release the valuable material in the release rich environment. For example, in Figure 12 the second processor 504 is shown configured to provide via piping 561 drainage of the valuable material in the form of a concentrate 562.

The first processor 502' may also be configured with piping 580 and pumping 280 to recirculate the tailings 542 back into the first processor 502'. The scope of the invention is also intended to include the second processor 504' being configured with corresponding piping and pumping to recirculate the concentrate 562 back into the second processor 504'.

### Figures 13-14

According to some embodiments of the present invention, the engineered collection media as shown in Figures 10a, 15a and 15b can be used for mineral recovery in a co-current device as shown in Figure 13. Figure 13 illustrates a co-current tumbler cell configured to enhance the contact between the engineered collection media and the mineral particles in a slurry.

As seen in Figure 13, the tumbler cell 600 may include a container 602 configured to hold a mixture comprising engineered collection media 70a and a pulp slurry or slurry 677. The slurry 677 may contain mineral particles. The container 602 may include a first input 614 configured to receive the engineered collection media 70a and a second input 618 configured to receive the slurry 677. On the other side of the container 602, an output 620 may be provided for discharging at least part of the mixture 681 from the container 602 after the engineered collection media 70a are caused to interact with the mineral particles in slurry 677 in the container. The mixture 681 may contain mineral laden media or loaded media and ore residue or tailings 679. The arrangement of the inputs and output on the container 602 as shown in Figure 13 is known as a co-current configuration. The engineered collection media 70a includes collection surfaces made of the hydrophobic foam, according to present invention to attract the mineral particles to the collection surface so as to form mineral laden media. In general, if the specific gravity of the engineered collection media 70a is smaller than the slurry 677, then a substantial amount of the engineered collection media 70a in the container 602 may stay afloat on top the slurry 677. If the specific gravity of the collection media 70a is greater than the slurry 677, then a substantial amount of the engineered collection media 70a may sink to the bottom of the container 602. As such, the interaction between the engineered collection media 70a and the mineral particles in slurry 677 may not be efficient to form mineral laden media. In order to increase or enhance the contact between the engineered collection media 70a and the mineral particles in slurry 677, the container 602 may be caused to turn, e.g., such that at least some of the mixture in the upper part of the container may be caused to interact with at least some of mixture in the lower part of the container 602. After being discharged from the container 602, the mixture 681 having mineral laden media and ore residue may be processed through a separation device such as a screen so that the mineral laden media and the ore residue can be separated. The container 602 can be a horizontal pipe or cylindrical drum configured to be rotated, as indicated by numeral 610, along a horizontal axis, for example.

Figure 14 illustrates a cross-current tumbler cell configured to enhance the contact between the collection media and the mineral particles in a slurry, according to some embodiments of the present invention. As seen in Figure 14, the container 602 of the tumbler cell 600' a first input 614, a second input 618, a first output 622 and a second output 624. The first input 614 may be arranged to receive engineered collection media 70a and the second output 624 is arranged to discharge ore residue 679. The second input 618 may be arranged to receive slurry 677 and the first output 622 is arranged to discharge mineral laden media 670. The arrangement of the inputs and outputs on the container 602 is known as a counter-current configuration. In the counter-current configuration, an internal separation device such as a screen may be used to prevent the medium laden media and the engineered collection media 70a in the container 602 from being discharged through the second output 624. As such, what is discharged through the second output 624 is ore residue or tailings 679. By rotating the container 602 along the rotation axis 691, at least some of the mixture in an upper part of the container 602 may be caused to interact with at least some of the mixture in a lower part of the container 602 so as to increase or enhance the contact between the engineered collection media 70a and the mineral particles in slurry 677.

### Figures 15a-15b

The engineered collection media in the form of cubes or spheres used in mineral separation are referred herein as synthetic beads. As shown in Figure 15a, each of the synthetic beads 70 has a solid body 82 made of the hydrophobic foam, according to the present invention. As shown in Figure 15b, each of the synthetic beads 70 has a core 86 and a surface layer 84. While the surface layer 84 is made of the hydrophobic foam, according to the present invention, the core 86 can be made of a different material such as a different polymer or polymer-based material, or a silica or silica-based, or a glass or glass-based material, ceramic, metal or a magnetic material.

The term "polymer bubbles or beads", and the term "synthetic bubbles" are used interchangeably.

### Three Dimensional Functionalized Open-Network Structure

Surface area is an important property in the mineral recovery process because it defines the amount of mass that can be captured and recovered. High surface area to volume ratios allows higher recovery per unit volume of media added to a cell. As illustrated in Figures 10a to 10d, the engineered collection media are shown as having an open-cell structure. Open cell or reticulated foam offers an advantage over other media shapes such as the sphere by having higher surface area to volume ratio. When the open-cell structure or reticulate foam is made of the hydrophobic foam, according to present invention, it promotes attachment of mineral to the foam "network", enables higher recovery rates and improved recovery of less liberated mineral when compared to the conventional process. For example, open cells allow passage of fluid and unattracted particles smaller than the cell size but capture mineral bearing particles that come in contact with the hydrophobic foam. Selection of cell size is dependent upon slurry properties and application.

The hydrophobic foam may be cut in a variety of shapes and forms. For example, a hydrophobic foam belt can be moved through the slurry to collect the desired minerals and then cleaned to remove the collected desired minerals. The cleaned foam belt can be reintroduced into the slurry. Strips, blocks, and/or sheets of foam of varying size can also be used where they are randomly mixed along with the slurry in a mixing cell. The thickness and cell size of a foam can be dimensioned to be used as a cartridge-like filter which can be removed, cleaned of recovered mineral, and reused.

As mentioned earlier, the open cell or reticulated foam made with the hydrophobic foam offers an advantage over other media shapes such as sphere by having higher surface area to volume ratio. Surface area is an important property in the mineral recovery process because it defines the amount of mass that can be captured and recovered. High surface area to volume ratios allows higher recovery per unit volume of media added to a cell.

The open cell or reticulated foam provides three-dimensional open network structures having high surface area with extensive interior surfaces and tortuous paths protected from abrasion and premature release of attached mineral particles. This provides for enhanced collection and increased functional durability. Without a coating, the hydrophobic foam conveyor belts or filters could last longer.

The use of the reaction product of an isocyanate and polyol promotes attachment of mineral to the foam "network", enables higher recovery rates and improved recovery of less liberated mineral when compared to the conventional process. This foam is open-cell structure so it allows passage of fluid and unattracted particles smaller than the cell size but captures mineral bearing particles the come in contact with the collection surfaces. Selection of cell size is dependent upon slurry properties and application.

A three-dimensional open cellular structure optimized to provide a compliant, tacky surface of low energy enhances collection of hydrophobic or hydrophobized mineral particles ranging widely in particle size. This structure may include, or take the form of, open-cell foam with a compliant, tacky surface of low surface energy.

The structure may be in the form of sheets, cubes, spheres, or other shapes as well as densities (described by pores per inch and pore size distribution), and levels of tortuosity that optimize surface access, surface area, mineral attachment/ detachment kinetics, and durability. These structures may be additionally optimized to target certain mineral particle size ranges, with denser structures acquiring smaller particle sizes. In general, cellular densities may range from 3.9 to 78.7 pores per cm (10 - 200 pores per inch), more preferably 3.9 to 35.4 pores per cm (10 - 90 pores per inch), and most preferably 7.8 to 23.6 pores per cm (20 - 60 pores per inch).

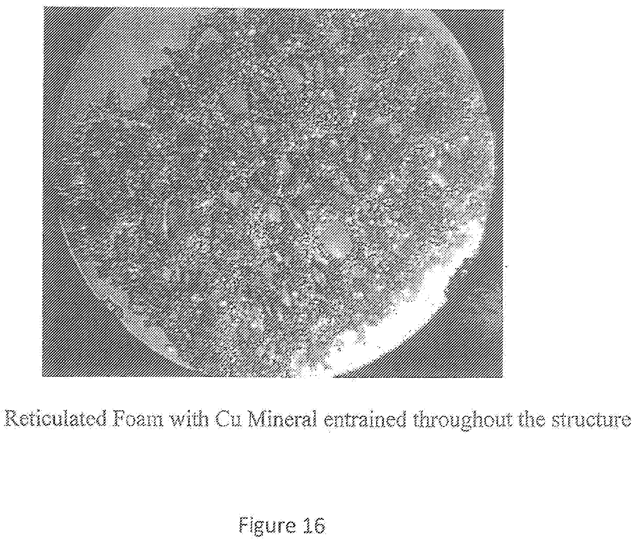

The specific shape or form of the structure may be selected for optimum performance for a specific application. For example, the structure may be cut in a variety of shapes and forms. For example, a hydrophobic foam belt could be moved through the slurry removing the desired mineral whereby it is cleaned and reintroduced into the slurry. Strips, blocks, and/or sheets of hydrophobic foam of varying size could also be used where they are randomly mixed along with the slurry in a mixing cell. Alternatively, a conveyor structure may be formed where the foam is encased in a cage structure that allows a mineral-containing slurry to pass through the cage structure to be introduced to the underlying foam structure where the mineral can react with the foam and thereafter be further processed in accordance with the present invention. The thickness and cell size could be changed to a form cartridge like filter whereby the filter is removed, cleaned of recovered mineral, and reused. Figure 16 is an example a section of hydrophobic reticulated foam that was used to recovery Chalcopyrite mineral. Mineral particles captured from copper ore slurry can be seen throughout the foam network.

There are numerous characteristics of the foam that may be important and should also be considered, as follows:
**Mechanical durability:** Ideally, the foam will be durable in the mineral separation process. For example, a life of over 30,000 cycles in a plant system would be beneficial. Without a coating, a conveyor belt, synthetic bead or a filter may have a significant advantage in medium durability and lifetime.
**Surface area:** Higher surface area provides more sites for the mineral to the surface of the foam substrate. There is a tradeoff between larger surface area (for example using small pore cell foam) and ability of the hydrophobic foam structure to capture mineral while allowing gangue material to pass through and not be capture, for example due to a small cell size that would effectively entrap gangue material. The foam size is selected to optimize capture of the desired mineral and minimize mechanical entrainment of undesired gangue material.
**Cell size distribution:** Cell diameter needs to be large enough to allow gangue and mineral to be removed but small enough to provide high surface area. There should be an optimal cell diameter distribution for the capture and removal of specific mineral particle sizes.
**Tortuosity:** Cells that are perfectly straight cylinders have very low tortuosity. Cells that twist and turn throughout the foam have "tortuous paths" and yield foam of high tortuosity. The degree of tortuosity may be selected to optimize the potential interaction of a mineral particle with the foam substrate, while not be too tortuous that undesirable gangue material in entrapped by the foam substrate.
**The pore size (pores per inch (PPI))** of the foam is an important characteristic which can be leveraged to improved mineral recovery and/or target a specific size range of mineral. As the PPI increases the specific surface area (SSA) of the foam also increases. A high SSA presented to the process increases the probability of particle contact which results in a decrease in required residence time. This in turn, can lead to smaller size reactors. At the same time, higher PPI foam acts as a filter due to the smaller pore size and allows only particles smaller than the pores to enter into its core. This enables the ability to target, for example, mineral fines over coarse particles or opens the possibility of blending a combination of different PPI foam to optimize recovery performance across a specific size distribution.

### Applications

The scope of the invention is described in relation to mineral separation, including the separation of copper from ore.

According to some embodiments of the present invention, the surface of a synthetic bead has a layer of hydrophobic foam, according to the present invention.

### The Scope of the Invention

It should be further appreciated that any of the features, characteristics, alternatives or modifications described regarding a particular embodiment herein may also be applied, used, or incorporated with any other embodiment described herein. It should be noted that the engineered collection media having the open-cell structure as shown in Figure 10a, for example, can be made of a material that has a specific gravity smaller than, equal to or greater than that of the slurry. The engineered collection media can be made from a magnetic polymer or have a magnetic core so that the para-, ferri-, ferro-magnetism of the engineered collection media is greater than the para-, ferri-, ferro-magnetism of the unwanted ground ore particles in the slurry. Thus, although the invention has been described and illustrated with respect to exemplary embodiments thereof, the foregoing and various other additions and omissions may be made therein and thereto without departing from the scope of the present invention as defined by the appended claims.

## Claims

1. . An engineered collection medium, comprising
a solid-phase body configured with a three-dimensional open-cell structure to provide a plurality of collection surfaces, the three-dimensional open-cell structure made of a hydrophobic material for attracting one or more mineral particles to the collection surfaces, wherein the hydrophobic material is made of a reaction product of an isocyanate and a polyol in the presence of a hydrophobic surfactant,
the isocyanate being selected from the group consisting of 1 ,6-hexamethylene diisocyanate, 1 -isocyantato- 3-isocyanatomethyl-3, 5, 5-trimethyl-cyclohexane (IPDI), 4,4'-diisocyanatodicyclohexylmethane, methylene diphenyl diisocyanate (MDI) and toluene diisocyanate (TDI),
the polyol being selected from the group consisting of polyester polyols, poly - ether polyols, polycarbonate polyol, polycaprolactone polyol, polybutadiene polyol, polysulfide polyol and fluorinated polyol, and
wherein the surfactant is alkyl or aryl EO-PO, polydimethylsiloxane-polyoxyalkylene block copolymers or fluorinated surfactants .

2. . The engineered collection medium according to claim 1, wherein the hydro - phobic material further comprises hydrogenated rosin resins, rosin esters, styrenated terpenes, polyterpenes, terpene phenolics, or phenolic resins.

3. . The engineered collection medium of claim 1, wherein the solid-phase body comprises a body form of a sheet, cube, sphere, or
comprises a reticulated foam block providing the three-dimensional open-cell structure, or
comprises a filter providing the three-dimensional open-cell structure, the struc - ture having open cells to allow fluid in the aqueous mixture to flow through the filter, or
comprises a conveyor belt having a surface configured with the three-dimensional open-cell structure.

4. . The engineered collection medium according to claim 1, wherein the three- di - mensional open-cell structure comprises a cellular density in the range of 3.9 to 78.7 pores per cm (10 to 200 pores per inch), or
comprises a cellular density in the range of 3.9 to 35.4 pores per cm (10 to 90 pores per inch), and preferably 7.8 to 23.6 pores per cm (20-60 pores per inch), or
comprises an open cell foam.

5. . A method for separating mineral particles from unwanted material in a mixture using an engineered collection medium, the method comprising
attaching mineral particles to one or more engineered collection media to provide one or more engineered collection media carrying mineral particles,
providing a processor configured to receive said one or more engineered collec - tion media carrying mineral particles, and
applying interruption forces to the engineered collection medium carrying mineral particles so as to remove the mineral particles from the collection surfaces,
wherein each of said one or more engineered collection media is an engineered collection medium as claimed in any one of claims 1 to 4.

6. . The method according to claim 5, wherein the method further comprises: providing a stirrer configured to provide mechanical agitation in a surfactant solu - tion so as to remove the mineral particles from the collection surfaces.

7. . The method according to claim 5, wherein the solid phase body comprises a conveyor belt carrying the mineral particles, said method further comprising causing a brushing device to rub against the conveyor belt for removing the min - eral particles from the collection surfaces.

8. . The method according to claim 5, wherein the method further comprises: providing a sonic source configured to provide ultrasonic waves in a liquid me - dium for removing the mineral particles from the collection surfaces.

9. . An apparatus suitable for performing the method claimed in anyone of claims 5-8, the apparatus comprising one or more engineered collection media, and fur - ther comprising
a device configured to attach mineral particles to said one or more engin - eered collection media to provide one or more engineered collection media carry - ing mineral particles,
a processor configured to receive said one or more engineered collection me - dia carrying mineral particles, and
a releasing apparatus configured to remove the mineral particles from the col - lection surfaces of said one or more engineered collection media,
wherein each of said one or more engineered collection media is an engin - eered collection medium as claimed in anyone of claims 1-4.

10. . The apparatus according to claim 9, wherein the releasing apparatus com - prises a stirrer configured to provide mechanical agitation or comprises a sonic source configured to provide ultrasonic waves in a liquid medium so as to remove the mineral particles from the collection surfaces.

11. . The apparatus according to claim 9, wherein the solid phase body comprises a conveyor belt carrying the mineral particles, the releasing apparatus comprising a brushing device configured to rub against the conveyor belt so as to remove the mineral particles from the collection surfaces.

## Patentansprüche

1. Ein technisch hergestelltes Sammelmedium, umfassend
einen Festphasenkörper, der mit einer dreidimensionalen, offen-zellige Struktur ausgebildet ist, um eine Vielzahl von Sammeloberflächen bereitzustellen, wobei die dreidimensionale, offen-zellige Struktur aus einem hydrophoben Material besteht, um ein oder mehrere Mineralpartikel an die Sammeloberflächen anzuziehen, wobei das hydrophobe Material aus einem Reaktionsprodukt eines Isocyanats und eines Polyols in Gegenwart eines hydrophoben Tensids besteht,
wobei das Isocyanat aus der Gruppe ausgewählt ist, die aus 1,6-Hexamethylen-Diisocyanat, 1-Isocyanato-3-isocyanatomethyl-3,5,5-trimethylcyclohexan (PDI), 4,4-Diisocyanatodicyclohexylmethan, Methylendiphenyldiisocyanat (MDI) und Toluoldiisocyanat (TDI) besteht,
wobei das Polyol aus der Gruppe ausgewählt ist, die aus Polyesterpolyolen, Polyetherpolyole, Polycarbonatpolyole, Polycaprolactonpolyole, Polybutadien-Polyole, Polysulfidpolyole und fluorierte Polyole besteht, und
wobei das Tensid Alkyl- oder Aryl-EO-PO, Polydimethylsiloxan-Polyoxyalkylen-Blockcopolymeren oder fluorierten Tensiden ist.

2. Das technisch hergestellte Sammelmedium nach Anspruch 1, wobei das hydrophobe Material ferner hydrierte Kolophoniumharze, Kolophoniumester, styrolierte Terpene, Polyterpene, Terpenphenole oder Phenolharze umfasst.

3. Das technisch hergestellte Sammelmedium nach Anspruch 1, wobei der Festphasenkörper eine Körperform in Form einer Scheibe, eines Würfels oder einer Kugel aufweist oder einen vernetzten Schaumstoffblock umfasst, der die dreidimensionale offen-zellige Struktur aufweist, oder
einen Filter umfasst, der die dreidimensionale offen-zellige Struktur aufweist, wobei die Struktur offene Zellen aufweist, um den Durchfluss von Fluid in der wässrigen Mischung durch den Filter zu ermöglichen, oder
ein Förderband umfasst, dessen Oberfläche mit der dreidimensionalen offen-zelligen Struktur ausgebildet ist.

4. Das technisch hergestellte Sammelmedium nach Anspruch 1, wobei die dreidimensionale offen-zellige Struktur eine Zelldichte im Bereich von 3,9 bis 78,7 Poren pro cm (10 bis 200 Poren pro Zoll) aufweist oder
eine Zelldichte im Bereich von 3,9 bis 35,4 Poren pro cm (10 bis 90 Poren pro Zoll) und vorzugsweise von 7,8 bis 23,6 Poren pro cm (20 bis 60 Poren pro Zoll) aufweist oder
einen offen-zelligen Schaumstoff umfasst.

5. Verfahren zum Abscheiden von Mineralpartikeln aus unerwünschtem Material in einer Mischung unter Verwendung eines technisch hergestellten Sammelmediums, wobei das Verfahren umfasst:
das Anlagern von Mineralpartikeln an ein oder mehrere technisch hergestellte Sammelmedien, um ein oder mehrere technisch hergestellte Sammelmedien bereitzustellen, die Mineralpartikel tragen;
das Bereitstellen eines Prozessors, der so konfiguriert ist, dass er das eine oder die mehreren technisch hergestellten Sammelmedien, die Mineralpartikel tragen, aufnimmt; und
das Aufbringen von Ablösungskräften auf das technisch hergestellte Sammelmedium, das Mineralpartikel trägt, um die Mineralpartikel von den Sammeloberflächen zu entfernen, wobei jedes der einen oder mehreren technisch hergestellten Sammelmedien ein technisch hergestelltes Sammelmedium gemäß einem der Ansprüche 1 bis 4 ist.

6. Verfahren nach Anspruch 5, wobei das Verfahren ferner umfasst:
Bereitstellen eines Rührers, der so konfiguriert ist, dass er eine mechanische Durchmischung in einer Tensidlösung bewirkt, um die Mineralpartikel von den Sammeloberflächen zu entfernen.

7. Verfahren nach Anspruch 5, wobei der Festphasenkörper ein Förderband umfasst, das die Mineralpartikel transportiert, wobei das Verfahren ferner umfasst, dass eine Bürstvorrichtung gegen das Förderband reibt, um die Mineralpartikel von den Sammeloberflächen zu entfernen.

8. Verfahren nach Anspruch 5, wobei das Verfahren ferner umfasst:
Bereitstellen einer Schallquelle, die so konfiguriert ist, dass sie Ultraschallwellen in einem flüssigen Medium erzeugt, um die Mineralpartikel von den Sammeloberflächen zu entfernen.

9. Vorrichtung, die zur Durchführung des in einem der Ansprüche 5 bis 8 beanspruchten Verfahrens geeignet ist, wobei die Vorrichtung ein oder mehrere technisch hergestellte Sammelmedien umfasst und ferner
eine Einrichtung umfasst, die so ausgelegt ist, dass sie Mineralpartikel an dem einen oder den mehreren technisch hergestellten Sammelmedien anlagert, um ein oder mehrere technisch hergestellte Sammelmedien bereitzustellen, die Mineralpartikel tragen,
einen Prozessor, der so konfiguriert ist, dass er das eine oder die mehreren technisch hergestellten Sammelmedien, die Mineralpartikel tragen, aufnimmt, und
eine Ablösungsvorrichtung, die so konfiguriert ist, dass sie die Mineralpartikel von den Sammeloberflächen des einen oder der mehreren technisch hergestellten Sammelmedien entfernt, wobei jedes der einen oder mehreren technisch hergestellten Sammelmedien ein technisch hergestelltes Sammelmedium gemäß einem der Ansprüche 1-4 ist.

10. Vorrichtung nach Anspruch 9, wobei die Ablösungsvorrichtung einen Rührer umfasst, der konfiguriert ist, eine mechanische Durchmischung zu bewirken, oder eine Schallquelle umfasst, die konfiguriert ist, Ultraschallwellen in einem flüssigen Medium zu erzeugen, um die Mineralpartikel von den Sammeloberflächen zu entfernen.

11. Vorrichtung nach Anspruch 9, wobei der Festphasenkörper ein Förderband umfasst, das die Mineralpartikel transportiert, und wobei die Ablösungsvorrichtung eine Bürstvorrichtung umfasst, die konfiguriert ist, dass sie an dem Förderband reibt, um die Mineralpartikel von den Sammeloberflächen zu entfernen.

## Revendications

1. Milieu de collecte de synthèse, comprenant :
un corps en phase solide configuré avec une structure à cellules ouvertes tridimensionnelle pour fournir une pluralité de surfaces de collecte, la structure à cellules ouvertes tridimensionnelle étant fabriquée dans un matériau hydrophobe pour attirer une ou plusieurs particules minérales vers les surfaces de collecte, dans lequel le matériau hydrophobe est fabriqué dans un produit de réaction entre un isocyanate et un polyol en présence d'un agent tensioactif hydrophobe,
l'isocyanate étant sélectionné parmi le groupe consistant en du diisocyanate de 1,6-hexaméthylène, du 1-isocyanatométhyl-3-isocyanatométhyl-3,5,5-triméthyl-cyclohexane (IPDI), du 4,4'-diisocyanatodicyclohexylméthane, du diisocyanate de méthylène-diphényle (MDI), et du diisocyanate de toluène (TDI) ,
le polyol étant sélectionné parmi le groupe consistant en des polyesters polyols, des polyéthers polyols, du polycarbonate-polyol, du polycaprolactone-polyol, du polybutadiène-polyol, du polysulfure-polyol, et du polyol fluoré, et
dans lequel le tensioactif est un EO-PO alkyle ou aryle, des copolymères à blocs polydiméthylsiloxane-polyoxyalkylène ou des tensioactifs fluorés.

2. Milieu de collecte de synthèse selon la revendication 1, dans lequel le matériau hydrophobe comprend en outre des résines de colophane hydrogénées, de la colophane estérifiée, des terpènes styrénés, des polyterpènes, des résines terpène-phénoliques, ou des résines phénoliques.

3. Milieu de collecte de synthèse selon la revendication 1, dans lequel le corps en phase solide comprend une forme de corps en feuille, en cube, en sphère, ou comprend un bloc de mousse réticulée fournissant la structure à cellules ouvertes tridimensionnelle, ou
comprend un filtre fournissant la structure à cellules ouvertes tridimensionnelle, la structure présentant des cellules ouvertes pour permettre au fluide dans le mélange aqueux de s'écouler à travers le filtre, ou
comprend un tapis roulant présentant une surface configurée avec la structure à cellules ouvertes tridimensionnelle.

4. Milieu de collecte de synthèse selon la revendication 1, dans lequel la structure à cellules ouvertes tridimensionnelle comprend une densité cellulaire comprise dans la plage allant de 3,9 à 78,7 pores par cm (10 à 200 pores par pouce), ou
comprend une densité cellulaire comprise dans la plage allant de 3,9 à 35,4 pores par cm (10 à 90 pores par pouce), et de préférence de 7,8 à 23,6 pores par cm (20 à 60 pores par pouce), ou
comprend une mousse à cellules ouvertes.

5. Procédé destiné à séparer des particules minérales de matières non souhaitées dans un mélange à l'aide d'un milieu de collecte de synthèse, le procédé comprenant les étapes pour
- fixer des particules minérales sur les un ou de plusieurs milieux de collecte de synthèse pour fournir un ou plusieurs milieux de collecte de synthèse portant les particules minérales ;
- fournir un processeur configuré pour recevoir lesdits un ou plusieurs milieux de collecte de synthèse portant les particules minérales, et
- appliquer des forces d'interruption aux milieux de collecte de synthèse portant les particules minérales de manière à éliminer les particules minérales des surfaces de collecte, et
dans lequel chacun des un ou plusieurs milieux de collecte de synthèse est un milieu de collecte de synthèse selon l'une quelconque des revendications 1 à 4.

6. Procédé selon la revendication 5, dans lequel le procédé comprend en outre l'étape suivante :
fournir un agitateur configuré pour fournir une agitation mécanique dans une solution de tensioactif de manière à éliminer les particules minérales des surfaces de collecte.

7. Procédé selon la revendication 5, dans lequel le corps en phase solide comprend un tapis roulant portant les particules minérales, ledit procédé comprenant en outre l'étape pour faire en sorte qu'un dispositif de brossage frotte contre le tapis roulant pour éliminer les particules minérales des surfaces de collecte.

8. Procédé selon la revendication 5, dans lequel le procédé comprend en outre l'étape suivante : fournir une source acoustique configurée pour fournir des ondes ultrasonores dans un milieu liquide pour éliminer les particules minérales des surfaces de collecte.

9. Appareil convenant pour réaliser le procédé selon l'une quelconque des revendications 5 à 8, l'appareil comprenant un ou plusieurs milieux de collecte de synthèse, et comprenant en outre :
- un dispositif configuré pour fixer des particules minérales sur lesdits un ou de plusieurs milieux de collecte de synthèse pour fournir un ou plusieurs milieux de collecte de synthèse portant les particules minérales ;
- un processeur configuré pour recevoir lesdits un ou plusieurs milieux de collecte de synthèse portant les particules minérales, et
- un appareil de libération configuré pour éliminer les particules minérales des surfaces de collecte desdits un ou plusieurs milieux de collecte de synthèse, et
dans lequel chacun des un ou plusieurs milieux de collecte de synthèse est un milieu de collecte de synthèse selon l'une quelconque des revendications 1 à 4.

10. Appareil selon la revendication 9, dans lequel l'appareil de libération comprend un agitateur configuré pour fournir une agitation mécanique, ou comprend une source acoustique configurée pour fournir des ondes ultrasonores dans un milieu liquide pour éliminer les particules minérales des surfaces de collecte.

11. Appareil selon la revendication 9, dans lequel le corps en phase solide comprend un tapis roulant portant les particules minérales, ledit appareil de libération comprenant un dispositif de brossage configuré pour frotter contre le tapis roulant pour éliminer les particules minérales des surfaces de collecte.
